# EUROPÄISCHE PATENTSCHRIFT

(11) **EP 2 829 399 B1**
(45) Veröffentlichungstag und Bekanntmachung des Hinweises auf die Patenterteilung: **03.05.2017**
(21) Anmeldenummer: 14171283.6
(22) Anmeldetag: 05.06.2014
(51) Int. Cl.: B32B 37/00, B32B 38/00, B32B 38/04, C14B 7/02, D06P 3/32

(54) **Verfahren und Vorrichtung zum Beschichten von Flächenstücken**
Method and device for coating flat workpieces
Procédé et dispositif de revêtement d'éléments plats

(30) Priorität: 07.06.2013 DE 102013210639
(43) Veröffentlichungstag der Anmeldung: 28.01.2015
(73) Patentinhaber: Cellofoam GmbH & Co. KG, 88400 Biberach (DE)
(72) Erfinder: Schmid, Torsten, 88400 Biberach (DE); Grimmeissen, Jürgen, 88400 Biberach (DE)
(74) Vertreter: Klingseisen, Franz

(56) Entgegenhaltungen:
- WO-A1-2004/011255
- US-A1- 2003 118 808
- US-A1- 2009 110 941

## Beschreibung

Die Erfindung betrifft ein Verfahren zum Beschichten von einzelnen Flächenstücken, insbesondere von einzelnen Lederstücken mit unregelmäßigen Umrisslinien.

US-A-2009/110 941 beschreibt ein Verfahren nach dem Oberbegriff des Anspruchs 1, wobei die Ränder von Lederstücken mittels Klebebändern an einer Trägerbahn befestigt werden.
Alternativ können die Lederstücke längs der Ränder mit einem Klebstoff auf der Trägerbahn so befestigt werden, dass die für die spätere Verwendung vorgesehene Sichtseite der Lederstücke nicht beeinträchtigt wird.

Es ist bekannt, als Rollenware vorliegendes Kunstleder mit einer Schaumstoffbeschichtung zu versehen, wobei verschiedene kontinuierlich arbeitende Beschichtungsverfahren angewendet werden, bei denen auf eine laufende Kunstlederbahn die in Bahnform vorliegende Beschichtung aufgebracht wird. Bei der Flammkaschierung beispielsweise wird die Kunstlederbahn mit einer ebenfalls in Rollenform vorliegenden Schaumstoffbahn verbunden, die durch einen oder zwei Flammbalken zur Ausbildung einer Klebeschicht angeschmolzen wird.
Es können auch andere Kaschiertechniken mit flächigen Materialien, wie z.B. Schaumstoffen, Vliesen, Folien und dergleichen angewendet werden. Gleichzeitig kann das Material, das direkt mit der Kunstlederbahn verbunden wird, auf der anderen Seite mit einem anderen Material z.B. einer Folie verbunden werden.

Insbesondere in der Automobilbranche wird Echtleder in Form von zugeschnittenen Flächenstücken oder in Form von kompletten Lederhäuten verarbeitet. Dabei kann das als einzelnes Flächenstück vorliegende Echtleder nicht in der gleichen Weise mit Schaumstoff- oder Vliesbahnen verbunden werden, wie dies bei in Rollenform vorliegendem Kunstleder der Fall ist. Die einzelnen Lederstücke werden bislang in mühsamer Handarbeit einzeln beschichtet.

Der Erfindung liege die Aufgabe zugrunde, ein Verfahren vorzuschlagen, um einzelne zu beschichtende Flächenstücke wie z.B. Echtlederstücke bei geringerem Kostenaufwand effektiv mit einer Beschichtung zu versehen.

Diese Aufgabe wird erfindungsgemäß durch die Merkmale im Kennzeichen des Anspruchs 1 gelöst. Dadurch, dass die zu beschichtenden Flächenstücke auf einer Trägerbahn aufgebracht werden, die dann nach einem an sich bekannten Kaschierverfahren mit einer Beschichtung versehen wird sowie
dadurch, dass die einzelnen Lederstücke in eine Bahnform gebracht werden, kann die so ausgebildete Materialbahn mit einer anderen Materialbahn beispielsweise durch Flammkaschierung beschichtet werden, ohne dass dazu Handarbeit erforderlich ist.

Aus der so beschichteten Materialbahn können in einem nachfolgenden Schritt die einzelnen Lederstücke ausgeschnitten oder ausgestanzt werden, sodass sie für die Weiterverarbeitung zur Verkleidung von Sitzen, Armlehnen, Kopfstützen und dergleichen verwendet werden können.

Die Erfindung wird beispielsweise anhand der Zeichnung näher erläutert. Es zeigen
- Fig. 1: in perspektivischer Ansicht eine Materialbahn mit darauf angebrachten Lederstücken,
- Fig. 2: in gleicher Ansicht die Materialbahn mit aufgebrachter Beschichtung,
- Fig. 3: aus der Materialbahn ausgeschnittene oder ausgestanzte Lederstücke mit Beschichtung,
- Fig. 4: schematisch eine Vorrichtung zum Aufbringen der Lederstücke auf einer Trägerbahn,
- Fig. 5: eine schematische Ansicht einer Kaschieranlage für die Flammkaschierung, und
- Fig. 6: schematisch die Aufbringung des Klebstoffs in Teilbereichen.

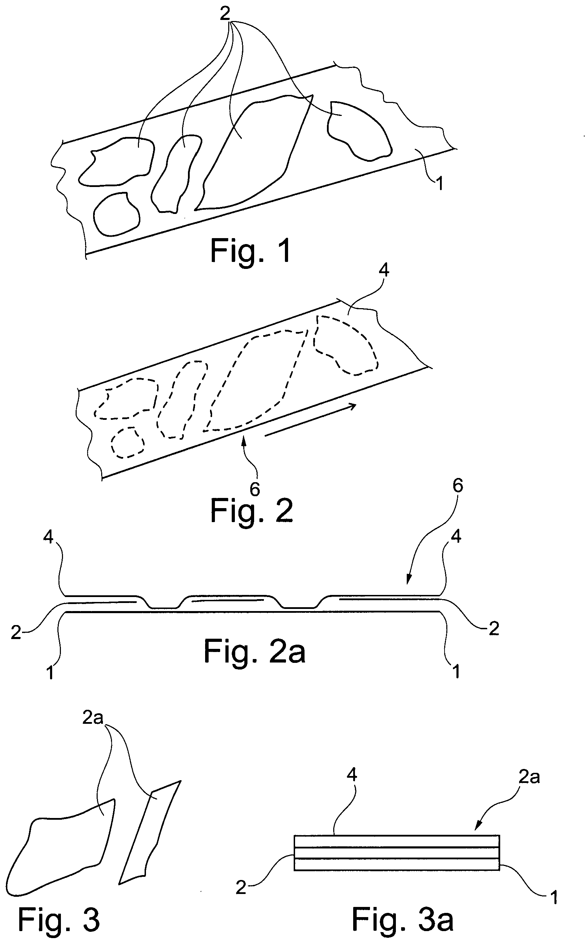

Fig. 1 zeigt eine als Rollenware vorliegende Trägerbahn 1, auf der einzelne Flächenstücke 2, beispielsweise Echtlederstücke, mittels einer Klebeschicht lösbar aufgebracht sind, wobei die Echtlederstücke 2 mit der Sichtseite auf der Trägerbahn 1 aufliegen.

Dadurch, dass die einzelnen Lederstücke oder Lederhäute in eine Bahn- bzw. Rollenform gebracht werden, kann die in Fig. 1 wiedergegebene Trägerbahn 1 mit den einzelnen Lederstücken 2 einer kontinuierlichen Weiterverarbeitung unterzogen werden.

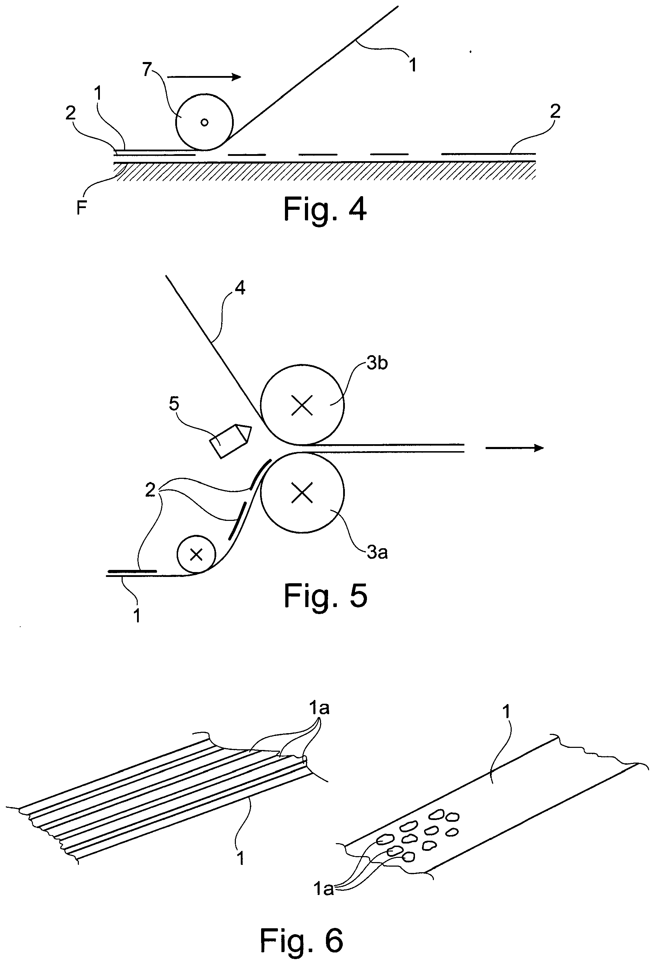

Beispielsweise kann die in Fig. 1 wiedergegebene Trägerbahn 1 mit den darauf lösbar fixierten Lederstücken 2 einer Flammkaschierung unterzogen werden, wie sie beispielsweise anhand der Fig. 5 erläutert wird. Die mit den aufgeklebten Lederstücken 2 versehene Trägerbahn 1 wird einem Rollenpaar 3a und 3b zugeführt, wobei die Trägerbahn 1 zunächst auf dem Umfang der Rolle 3a zum Anliegen kommt. Eine thermoplastische Materialbahn 4, wie beispielsweise eine Schaumstoffbahn aus Polyurethan oder Polyolefin, wird dem Spalt zwischen den beiden Rollen 3a und 3b über die obere Rolle 3b zugeführt, wobei die Oberfläche der thermoplastischen Materialbahn 4 durch einen Flammbalken bzw. einen Linien-Gas-Brenner 5 über die gesamte Breite aufgeschmolzen wird, sodass ein Klebefilm entsteht. Zwischen den beiden Rollen 3a und 3b werden die beiden Bahnen 1 und 4 unter Zwischenlage der Flächenstücke 2 miteinander verbunden.

Anstelle einer Flammkaschierung kann auch eine Kaschierung mit einer Flachbettanlage oder mit einer Pulverstreuanlage vorgenommen werden, bei der die Beschichtung durch Aufstreuen von pulverförmigem Material ausgebildet wird.

Hierbei kann unabhängig von dem verwendeten Kaschierverfahren die Beschichtungsbahn 4 sowohl mit den Lederstücken 2 als auch mit der zwischen diesen freiliegenden Oberfläche der Trägerbahn 1 fest bzw. nichtlösbar verbunden werden.

Hierdurch wird eine in Fig. 2 wiedergegebene Bahn 6 ausgebildet, die aus einem Verbund der Trägerbahn 1, den Lederstücken 2 und der Beschichtungsbahn 4 besteht, wie dies schematisch in einer Querschnittsansicht in Fig. 2a wiedergegeben ist.

Da der Zwischenraum zwischen den einzelnen flächigen Lederstücken 2 beim Beschichten der Lederstücke 2 mit z.B. einer Schaumstoffbahn 4 ebenfalls beschichtet wird, wie Fig. 2a schematisch zeigt, werden die Lederstücke 2 vorzugsweise möglichst dicht nebeneinanderliegend auf der Trägerbahn 1 im ersten Verfahrensschritt aufgebracht, um den Abfall an Beschichtungsmaterial 4 einerseits und Material für die Trägerbahn 1 andererseits möglichst gering zu halten.

Beim Abziehen der Trägerbahn 1 von der Sichtseite der Lederstücke 2 in Fig. 2a wird zwar die Beschichtungsbahn 4, mit der die Trägerbahn 1 zwischen den Lederstücken 2 durch Klebstoff oder durch Flammkaschieren direkt verbunden ist, beschädigt und beispielsweise eingerissen, insbesondere wenn die Beschichtungsbahn 4 aus einer Schaumstoffbahn besteht, jedoch ist dies für das Endprodukt insofern unschädlich, als vorgegebene Formstücke aus den so beschichteten Lederstücken 2 ausgeschnitten oder ausgestanzt werden. Mit anderen Worten kann die Klebeverbindung zwischen Beschichtungsbahn 4 und Trägerbahn 1 im Bereich der Zwischenräume zwischen den aufgelegten Lederstücken 2 ohne weiteres wesentlich stärker sein als die Klebewirkung zwischen Trägerbahn 1 und Lederstücken 2.

Auf der Sichtseite der Lederstücke 2 kann eine Folie aufgebracht werden, die auf beiden Seiten selbstklebend ausgerüstet ist, um auf der Trägerbahn 1 eine Kleberschicht auszubilden. Eine solche Folie kann beispielsweise auch in Streifenform auf den Lederstücken 2 aufgebracht werden, um diese über ihre ganze Fläche auf der Trägerbahn 1 zu fixieren, wobei die Streifen der Selbstklebefolie einen Abstand voneinander haben, der kleiner ist als die Flächenausdehnung der kleinsten Flächen- bzw" Lederstücke 2.

Durch eine solche Verringerung der Klebeflächen zwischen Trägerbahn 1 und Lederstücken 2 kann die Haftwirkung im Verhältnis zu der Verbindung zwischen Trägerbahn 1 und beispielsweise durch Flammkaschierung aufgebrachter Schaumstoffbahn 4 weiter verringert werden, um das Ablösen der Trägerbahn 1 von den Lederstücken 2 zu erleichtern.

Fig. 3 zeigt einzelne aus der Bahn 6 ausgeschnittene oder ausgestanzte Formstücke 2a, deren Umrisslinie die für die weitere Verarbeitung vorgesehene Formgebung hat. Wie Fig. 3a zeigt, kann jedes der Formstücke 2a einen dreilagigen Aufbau aus der Trägerbahn 1, dem Lederstück 2 und dem Beschichtungsmaterial 4 haben.

Zum weiteren Verarbeiten kann die Trägerbahn 1 von der beschichteten Bahn 6 in Fig. 2 und 2a abgezogen werden, bevor die Formstücke 2a ausgeschnitten werden, oder es kann die Trägerbahn 1 von den bereits ausgestanzten Formstücken 2a in Fig. 3 und 3a abgezogen werden.
Wenn die Trägerbahn 1 von den fertig ausgestanzten Formstücken 2a abgezogen wird, wird das Abziehen durch eine Klebeverbindung nur auf Teilflächen 1a zwischen Trägerbahn 1 und Lederstücken 2 erleichtert, wie dies anhand der Fig. 6 erläutert wird.

Die einzelnen Lederstücke oder Lederhäute 2 werden mit der Ledersichtseite auf der Trägerbahn 1 vorzugsweise durch eine Selbstklebeausrüstung der Trägerbahn 1 aufgebracht, worauf die Trägerbahn 1, auf der die Lederstücke 2 flächig fixiert sind, zu einer Rolle aufgewickelt wird. Dadurch, dass mehrere Lederstücke 2 auch nebeneinandergelegt auf der Trägerbahn 1 aufgelegt werden können, ist es möglich, Rollenbreiten bis zu zwei oder drei Meter vorzusehen, wodurch bei der nachfolgenden kontinuierlichen Verarbeitung die Effizienz der Verarbeitung erhöht wird.

Als Trägerbahn 1 wird vorzugsweise eine Kunststofffolie mit einer Breite bis zu drei Meter vorgesehen. Die Folie kann ein- oder beidseitig entsprechend silikonisiert sein, damit die Kleberschicht beim Aufwickeln der Folienbahn 1 nur an der zugeordneten Seite der Folienbahn haftet.

Die Dicke der Folie 1 kann im Bereich von etwa 10 µm bis ca. 200 µm liegen.

Die Auftragsmenge des Klebstoffs auf der Trägerbahn 1 beträgt vorzugsweise etwa 0,7 bis ca. 15 g/qm.

Der Klebstoff wird so gewählt, dass eine ausreichende Haftwirkung für den Transport und die Handhabung der Lederstücke 2 auf der Trägerbahn 1 vorhanden ist, der Klebstoff aber die Oberfläche der Lederstücke 2 auf der Sichtseite nicht beeinträchtigt, wenn die Trägerbahn 1 von den Lederstücken 2 abgezogen wird.

Die Trägerbahn 1 kann über die gesamte Oberfläche mit einer Klebstoffschicht versehen sein, sodass beim Aufbringen der Lederstücke 2 an einer beliebigen Stelle der Trägerbahn 1 die Lederstücke 2 ganzflächig auf der Trägerahn 1 fixiert werden Vorteilhafterweise kann die Klebstoffschicht auf der Trägerbahn 1 in einem vorgegebenen Muster von kleineren Flächenbereichen 1 a, beispielsweise Streifen oder runde Klebestellen, wie Fig. 6 zeigt, aufgebracht sein, wodurch das Abziehen der Trägerbahn 1 von fertig ausgestanzten Formstücken, wie sie in Fig. 3a wiedergegeben sind, erleichtert wird.

Die Lederstücke 2 können von Hand auf der Trägerbahn 1 aufgeklebt werden. Es ist auch möglich, die einzelnen Lederstücke oder Lederhäute 2 auf einer Fläche F auszubreiten, wie dies Fig. 4 zeigt, worauf die Trägerbahn 1 beispielsweise durch eine umlaufende Rolle 7, die sich über die Breite der Trägerbahn 1 erstreckt, auf der Sichtseite der Lederstücke 2 aufgedruckt wird. Anschließend kann die Trägerbahn 1 mit den darauf lösbar angebrachten Lederstücken 2 zu einer Rolle gewickelt und einer kontinuierlich arbeitenden Beschichtungsanlage zugeführt werden.

Es ist auch möglich, die Lederstücke 2 durch eine Walze oder Rolle auf einer auf der Fläche F aufliegenden Trägerbahn 1 aufzubringen, die selbstklebend ausgerüstet ist.

Nach einer weiteren Abwandlung kann die Sichtseite der Lederstucke 2 mit einer beidseitig selbstklebenden Folie beschichtet werden, worauf die so beschichteten Lederstücke 2 auf einer Trägerbahn 1 aufgeklebt werden, die selbst nicht mit einer Kleberschicht versehen ist,

Das beschriebene Verfahren ist nicht nur für die Beschichtung von Echtlederstücken oder Lederhäuten geeignet, es kann auch bei vorgefertigten Flächenstücken aus einem anderen Material angewendet werden, wenn vorgegebene einzelne Flächenstücke kontinuierlich beschichtet werden sollen,

## Patentansprüche

1. Verfahren zum Beschichten von einzelnen Flächenstücken, insbesondere Lederstücken oder Lederhäuten mit unregelmäßiger Umrissform,
wobei die einzelnen Flächenstücke (2) auf einer Trägerbahn (1) aufgebracht und mit dieser lösbar verbunden werden,
worauf die Trägerbahn (1) mit den darauf aufgebrachten Flächenstücken (2) einem kontinuierlichen Beschichtungsverfahren derart unterzogen wird, dass auf den Flächenstücken (2) und der dazwischen freiliegenden Trägerbahn (1) eine Beschichtungsbahn (4) aufgebracht wird, und
anschließend einzelne Formstücke (2a) ausgeschnitten oder ausgestanzt werden,
wobei die Trägerbahn (1) vor oder nach dem Ausschneiden der Formstücke (2a) von diesen abgezogen wird,
**dadurch gekennzeichnet,**
**dass** die Flächenstücke (2) mit der Sichtseite über ihre ganze Fläche auf der Trägerbahn (1) lösbar aufgeklebt werden und die Rückseite der Flächenstücke (2) sowie die zwischen den Flächenstücken (2) freiliegende Trägerbahn (1) mit der Beschichtungsbahn (4) fest verbunden wird.

2. Verfahren nach Anspruch 1, wobei als Trägerbahn (1) eine Kunststofffolie mit Selbstklebeausrüstung verwendet wird.

3. Verfahren nach Anspruch 1, wobei die einzelnen Flächenstücke (2) mit einer beidseitig mit einer Selbstklebeausrüstung versehenen Bahn beschichtet werden und die so beschichteten Flächenstücke (2) auf der Trägerbahn (1) flächig fixiert werden.

4. Verfahren nach einem der vorhergehenden Ansprüche, wobei zum flächigen Fixieren der Flächenstücke (2) auf der Trägerbahn (1) über die Fläche der Flächenstücke (2) verteilt angeordnete Klebeflächen (1 a) vorgesehen werden.

5. Verfahren nach einem der vorhergehenden Ansprüche, wobei die einzelnen Flächenstücke (2) auf der Trägerbahn (1) mittels einer Rolle (7) angepresst werden.

6. Verfahren nach einem der vorhergehenden Ansprüche, wobei eine Klebstoffschicht von ca. 0,7 bis ca. 15g/qm Klebstoff auf der Trägerbahn (1) verwendet wird.

## Claims

1. A process for coating individual surface pieces, especially pieces of leather or leather hides with an irregular outline shape,
wherein the individual surface elements (2) are applied to a carrier web (1) and detachably connected thereto,
whereupon the carrier web (1) with the area portions (2) applied thereto is subjected a continuous coating method such that on the surface sections (2) and the carrier web (1) exposed therebetween a coating web (4) is applied, and
then individual shaped pieces (2a) are cut or punched,
wherein the carrier web (1) is pulled off from this before or after the cutting of the shaped pieces (2a),
**characterized in that**
the surface elements (2) are releasably adhered over their whole surface with the visible side on the carrier web (1) and the backside of the surface elements (2) as well as the carrier web (1) exposed between the surface elements (2) is firmly connected with the coating web (4).

2. The method of claim 1, wherein a plastic film with self-adhesive equipment is used as the carrier web (1).

3. The method of claim 1, wherein the individual surface elements (2) are coated with a web provided on both sides with a self-adhesive equipment and the thus coated surface elements (2) are fixed planar on the carrier web (1).

4. Method according to one of the preceding claims, wherein for the planar fixation of the surface elements (2) on the carrier web (1) adhesive surfaces (1a) are provided, which are arranged distributed on the surface of the surface elements (2).

5. Method according to one of the preceding claims, wherein the individual surface elements (2) on the carrier web (1) are pressed on by means of a roller (7).

6. Method according to one of the preceding claims, wherein an adhesive layer of about 0.7 to about 15g / m² adhesive is used on the carrier web (1).

## Revendications

1. Procédé de revêtement d'éléments plats individuels, en particulier d'éléments en cuir ou de peaux de cuir ayant un contour irrégulier, dans lequel les éléments plats (2) individuels sont appliqués sur une bande de support (1) et sont reliés avec celle-ci de manière à rester amovibles, à la suite de quoi la bande de support (1) comportant les éléments plats (2) appliqués est soumise à un procédé de revêtement en continu de telle sorte qu'une bande de revêtement (4) soit appliquée sur les éléments plats (2) et la bande de support (1) dégagée entre ceux-ci, et puis que des éléments formés (2a) individuels soient découpés ou estampés, la bande de support (1) étant retirée de ceux-ci avant ou après la découpe des éléments formés (2a), **caractérisé en ce que** les éléments plats (2) sont collés face visible sur la bande de support (1) sur toute leur surface de manière à être amovibles, et le dos des éléments plats (2) ainsi que la bande de support (1) dégagée entre les éléments plats (2) sont solidement liés avec la bande de revêtement (4).

2. Procédé selon la revendication 1, dans lequel on utilise un film en plastique ayant un apprêt auto-adhésif comme bande de support (1).

3. Procédé selon la revendication 1, dans lequel les éléments plats (2) individuels sont revêtus d'une bande dotée d'un apprêt auto-adhésif sur ses deux faces et les éléments plats (2) ainsi revêtus sont fixés à plat sur la bande de support (1).

4. Procédé selon l'une des revendications précédentes, dans lequel, pour fixer à plat les éléments plats (2) sur la bande de support (1), des surfaces adhésives (1a) réparties sur la surface des éléments plats (2) sont prévues.

5. Procédé selon l'une des revendications précédentes, dans lequel les éléments plats (2) individuels sont pressés sur la bande de support (1) au moyen d'un rouleau (7).

6. Procédé selon l'une des revendications précédentes, dans lequel une couche adhésive d'environ 0,7 à environ 15 g/m² d'adhésif est utilisée sur la bande de support (1).
